# EUROPEAN PATENT SPECIFICATION

(11) **EP 1 176 232 B1**
(45) Date of publication and mention of the grant of the patent: **27.04.2016**
(21) Application number: 01116179.1
(22) Date of filing: 04.07.2001
(51) Int. Cl.: D01D 11/06, B05D 5/00, B29C 65/48

(54) **Variable spacing strand coating system and method**
Verfahren und Vorrichtung zum Beschichten von Fäden mit variablem Abstand zueinander
Dispositif et procédé de revêtement de fils à espacement variable entre eux

(30) Priority: 24.07.2000 US 621721
(43) Date of publication of application: 30.01.2002
(73) Proprietor: Illinois Tool Works Inc., Glenview, IL 60025 (US)
(72) Inventor: Bolyard, Edward W. Jr., Old Hickory, Tennessee 37138 (US); Bourget, Daniel D., Hendersonville, Tennessee 37075 (US); MacLean, Mairi C., Hendersonville, Tennessee 37075 (US)
(74) Representative: Roche, von Westernhagen & Ehresmann

(56) References cited:
- EP-A- 0 474 155
- US-A- 4 631 078
- US-A- 4 842 666

## Description

### BACKGROUND OF THE INVENTION

The invention relates generally to strand coating, and more particularly to variable spacing strand coating systems and methods therefor, known, for instance, from US-A-5 525 175.

An object of the present invention is to provide novel strand coating methods and apparatus that overcome problems in and improve upon the prior art.

Another object of the invention is to provide novel strand coating methods that are economical.

A further object of the invention is to provide novel strand coating methods that are reliable.

Another object of the invention is to provide novel strand coating methods for variably spacing a plurality of strands.

Another object of the invention is to provide novel strand coating methods for variably spacing a plurality of strands relative to a substrate without changing coating material dispensers or strand guides.

A further object of the invention is to provide novel strand coating methods for variably spacing a plurality of strands without resetting system fluid and air pressure.

Yet another object of the invention is to provide novel strand coating methods for more accurately aligning one or more strands relative to a coating material dispenser.

Another object of the invention is to provide novel strand coating methods that are less susceptible to misalignment.

Still another object of the invention is to provide novel strand coating methods having adjustable strand guides.

Another object of the invention is to provide novel strand coating methods having coating material dispensers with strand guides coupled thereto.

A further object of the invention is to provide novel strand coating methods having coating material dispensers with strand guides coupled thereto that are pivotally adjustable relative to a substrate.

A more particular object of the invention is to provide novel strand coating methods comprising a strand guide having a guiding surface at an angle relative to a moving substrate, a plurality of moving strands disposed side by side over the guiding surface of the strand guide, and a coating material dispenser disposed adjacent the plurality of strands.

Another more particular object of the invention is to provide novel strand coating methods and apparatuses comprising an applicator head pivotally mounted on a support member, a coating material dispenser mounted on the applicator head, a strand guide mounted on the applicator head, whereby the strand guide and the coating material dispenser are adjustably positionable in unison by pivoting the applicator head.

Yet another more particular object of the invention is to provide novel strand coating methods and apparatuses comprising a coating material applicator having a dispenser with at least one orifice, a roller pin extending from a roller arm adjustably coupled to the coating material applicator by a pivot member, and a strand guide roller having a plurality of grooves disposed about a rotation axis thereof, the strand guide roller rotatably coupled to the roller pin.

Still another more particular object of the invention is to provide novel strand coating systems and methods comprising drawing a plurality of strands side by side, in spaced apart relation over a strand guide adjacent a substrate, applying coating material from a coating material dispenser onto the plurality of strands on a downstream side of the strand guide, depositing the plurality of strands with the coating material applied thereto onto the substrate, adjusting a spacing of the plurality of strands on the substrate by changing an orientation of the strand guide relative to the substrate.

These and other objects, aspects, features and advantages of the present invention will become apparent upon consideration of the claims, especially of independent claims 1 and 9.

According to claim 1 the objects are solved i.e. by the features of the characterizing portion of said apparatus claim namely that the strand guide and the coating material dispenser are adjustably positionable in unison by pivoting the applicator head, so that an angle between the strand guide and a substrate can be changed.

According to claim 9 the objects are solved i.e. by the features of the characterizing portion of said method claim namely varying the spacing of the plurality of strands on the substrate by changing an orientation of the strand guide relative to the substrate.

The apparatus and method claim can be used with a strand coating system comprising:
a strand guide having a guiding surface;
a plurality of moving strands disposed side by side over the guiding surface of the strand guide;
a coating material dispenser disposed adjacent the plurality of strands, whereby the guiding surface is at an angle relative to a moving substrate having a surface, thus the spacing between adjacent strands relative to the substrate surface is reduced and the spacing between the plurality of strands deposited onto the substrate is varied by changing the orientation of the strand guide.

With said system the strand guide may be coupled to the coating material dispenser on an upstream side thereof and in fixed relation relative thereto, and in particular the coating material dispenser and strand guide are adjustably mounted on a pivot member.

With said system the strand guide is a roller and the strand guiding surface includes a plurality of spaced apart grooves disposed about the roller, and in particular the coating material dispenser may be mounted on an applicator head, the strand guide may be coupled to the applicator head on an upstream side of the coating material dispenser and / or the coating material dispenser comprises a plurality of orifices arranged side by side, each orifice of the coating material dispenser aligned with a corresponding groove of the strand guide whereby in particular the applicator head may be pivotally mounted on a pivot shaft substantially transverse to the side by side arrangement of the plurality of orifices, whereby further in particular the roller rotatably coupled to a roller shaft extending from a roller arm pivotally coupled the the applicator head or whereby a vacillating filament may be emanating between each orifice and the corresponding adjacent strand.

The invention will become more fully apparent upon careful consideration of the following Detailed Description of the Invention and the accompanying Drawings, which may be disproportionate for ease of understanding, wherein like structure and steps are referenced generally by corresponding numerals and indicators.

US-A-4 842,666 discloses a process for the attachment of ribbonlike elastic elements to a flat substrate by means of an adhesive. This document does not disclose a strand guide having a guiding surface at an angle relative to the substrate, thus the spacing between adjacent strands relativ to the substrate surface is reduced. This document does not either show a strand coating apparatus having an applicator head pivotally mounted on the support member. A strand guide roller with a plurality of grooves for receiption of the strands is also not shown in this document. It is not known from this document to change an orientation of a strand guide relative to the substrate.

US 5,525,175 discloses an apparatus and a method for applying an elastic strand onto a moving substrate along a selected curvilinear path. Strand guides are disclosed that are slideable in a cross machine direction. Moreover these strand guides are pivotable to maintain the relationship between the surface of the guides and the curvilinear path and to maintain a constant spacing between the elastic strands of a path. It is not disclosed to vary the spacing between the deposited strands by changing the orientation of the strand guide. A pivotally mounted coating material dispenser is also not disclosed, neither is a coating material dispenser that is positionable in unison with a strand guide.

### BRIEF DESCRIPTION OF THE DRAWINGS

Fig. 1 is a strand coating system.
Fig. 2 is a partial view of a strand coating applicator.
Fig. 3 is a partial view olf an exemplary coating material dispenser in a first configuration.
Fig. 4 is another partial view of an exemplary coating material dispenser in a second configuration.
Fig. 5 is another view of an exemplary strand guide mounted to an exemplary strand coating applicator.

### DETAILED DESCRIPTION OF THE INVENTION

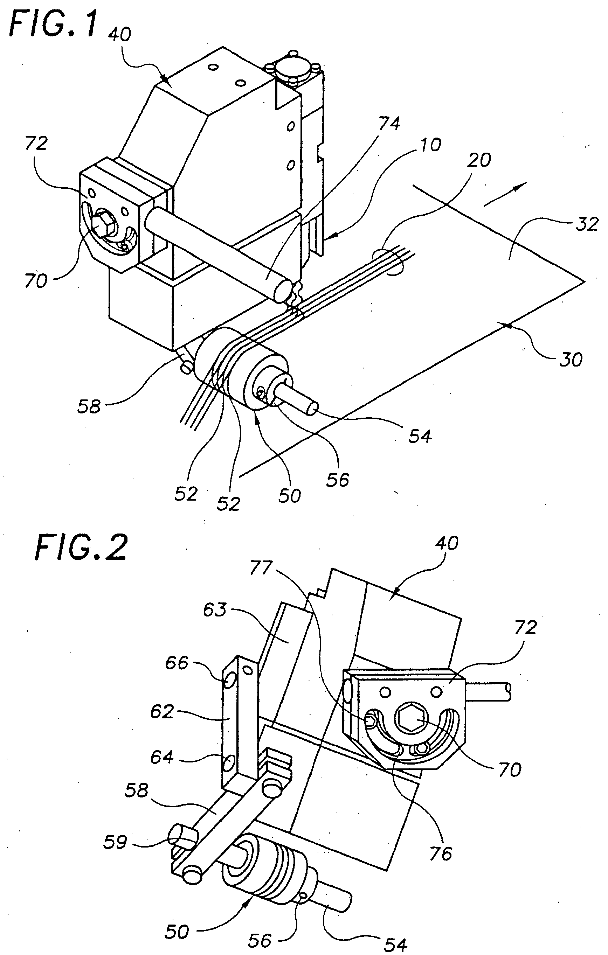

In Fig. 1, the strand coating system comprises a coating material dispenser 10 that applies a coating material, for example a hot melt adhesive or an atomized substance, onto one or more strands, identified collectively by numeral 20, moving relative thereto.

The strands 20 may, for example, be elastic rubber or Lycra materials used in the manufacture of diapers, incontinence pads and hospital garments. The strands may also be wire or cable, for example fiber optic cable, or some other elongated member onto which it is desirable to deposit a coating material.

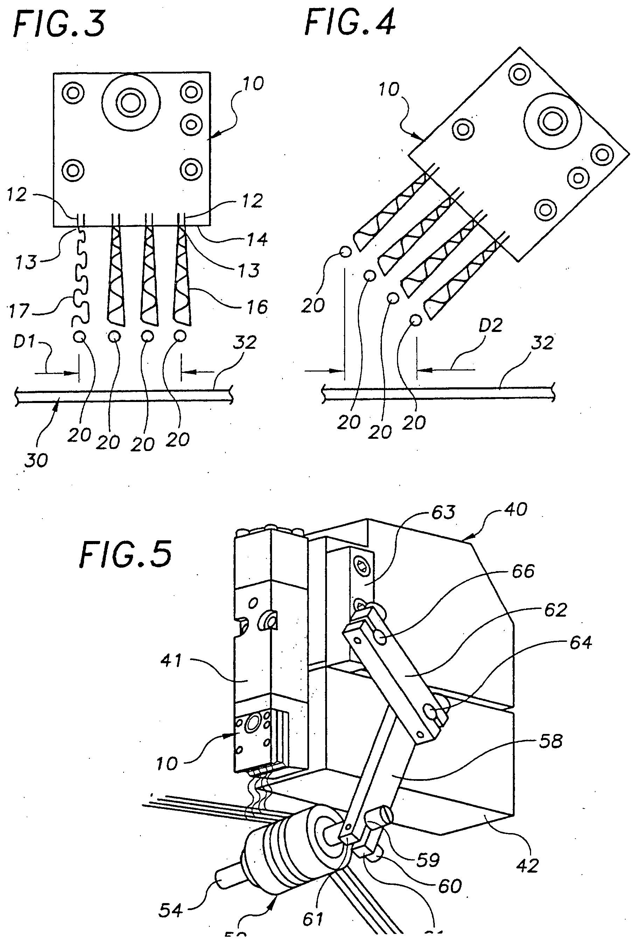

In FIG. 3, the exemplary dispenser 10 includes a plurality of conduits 12, shown only partially and in phantom, terminating at corresponding orifices arranged in a spaced apart series on a side 14 of the dispenser. The orifices of the exemplary dispenser each emit therefrom a corresponding coating material flow 16, which may be a substantially continuous or discrete vacillating filament or an atomized spray, toward a corresponding strand in alignment with the orifice.

In FIG. 3, some of the orifices 13 are illustrated schematically at the origin of the corresponding flows 16 spaced apart evenly in a single row on the dispenser. The orifices may be recessed or protrude from the side 14 of the dispenser. In other embodiments, the spacing between adjacent orifices is not necessarily the same. Alternatively, there may be more than one row or series of orifices arranged in alignment with the direction of the strand so that more than one orifice dispenses coating material onto each strand. In other embodiments, the orifices of adjacent rows may be offset.

Coating material dispensers suitable for use with the present invention are disclosed for example in U.S. Patent No. 5,902,540, entitled "Meltblowing Method and Apparatus", and U.S. Patent No. 5,904,298, entitled "Improved Meltblowing Method and System". These preferred exemplary devices are capable of producing filaments and atomized spray patterns that vacillate predominately non-parallel to the axis of the strands and provide precise control over the coating material dispensed therefrom.

In one embodiment, illustrated in FIG. 3, the coating material dispenser 10 dispenses substantially continuous coating material filaments 17 having a repeating, generally omega shaped pattern from the orifices thereof, only one of which is illustrated, as disclosed more fully in co-pending U.S. ApplicationNo. 09/143,883 entitled "Omega Spray Pattern And Method Therefor", which is assigned commonly with the present application.

In other embodiments, the coating material dispenser may be a spiral spray nozzle having a single orifice that dispenses a corresponding spiral filament onto one or more strands, or alternatively some other coating material dispensing apparatus.

In FIG. 5, the exemplary coating material dispenser 10 is coupled to or mounted on an applicator head 40, which supplies coating material and in some embodiments heated air to the coating material dispenser, for example through a nozzle module 41, as is known generally by those having ordinary skill in the art.

In some applications, strands having coating material applied thereto are adhered to or deposited on a substrate moving relative to the coating material dispenser, usually in uni son with the strands. The coating material dispenser however may move relative to the one or more strands and any substrate.

A strand guide having a guiding surface is preferably disposed adjacent the coating material dispenser, preferably on an upstream side thereof, to guide the strands past the coating material dispenser. The one or more strands are generally drawn over the guiding surface of the strand guide, which aligns the strands side by side in spaced apart relation relative to corresponding orifices of the coating material dispenser, for dispensing coating material dispensed therefrom onto the strands.

In the exemplary embodiment of FIG. 1, the strand guide is a rotatable roller 50 and the strand guiding surface thereof includes a plurality of spaced apart grooves 52 disposed thereabout. The strands are each disposed in a corresponding groove 52. The spacing of at least some of the grooves generally corresponds with the spacing of the dispenser orifices. In the exemplary embodiment, the roller aligns and guides the strands adjacent a corresponding orifice of the coating material dispenser, as illustrated in FIG. 3. In alternative embodiments, the strand guide may have other configurations besides a channeled roller.

The strand guide is preferably coupled to the coating material dispenser, in fixed relation relative thereto. In the exemplary embodiment, the coating material dispenser and strand guide are both coupled to the applicator head, thereby eliminating or at least substantially reducing any misalignment therebetween, for example misalignment caused by vibrating machinery, as frequently occurs in prior art systems having the strand guide coupled to machinery other than the coating material dispenser.

In FIGS. 1, 2 and 5, the exemplary roller guide 50 is rotatably coupled to a roller axle or shaft 54, preferably with roller bearings. In FIGS. 1 and 2, the exemplary roller guide 50 is retained on the roller shaft 54 by a collar 56 fastened thereto with a set screw or other fastening means.

In FIGS. 2 and 5, the roller shaft 54 extends from a roller arm 58 adjustably coupled to the applicator head 40. The roller shaft is also preferably adjustably coupled to the roller arm, for example by threaded engagement with a threaded opening 59 of the roller arm 58. In the exemplary embodiment, the roller guide 50 and/or roller shaft 54 is adjustable in either direction along the axis of the shaft 54 to align the guide grooves of the roller 50 relative to the one or more orifices of the coating material dispenser.

In FIGS. 2 and 5, the roller arm 58 is pivotally coupled to a guide arm 62 by a pivot pin 64 extending from one or the other. The guide arm 62 is also preferably adjustably coupled to the applicator, for example by a pivot pin 66 extending from a bracket 63 mounted thereon.

In FIG. 5, the guide roller 50 may be adjustably positioned toward and away from a bottom side 42 the applicator head 40. The guide roller 50 may also be adjustably positioned in the upstream and downstream direction of the strands, closer or farther away from the dispenser.

In the exemplary embodiment of FIG. 5, the roller axle 54 is secured in the opening 59 of the roller arm 58 by a bolt 60 disposed through prongs 61 thereof, which are clamped about the shaft 54 upon tightening the bolt. The guide arm 62 is similarly secured to the pivot pin 66, and the roller arm 58 is similarly secured to the guide arm 62. In other embodiments, the guide roller is adjustably coupled to the applicator head by other structure.

In some embodiments of the invention, the strand guide is adjustably mounted on a pivot member to change the orientation of the guiding surface of the strand guide to vary the spacing of the strands relative to the substrate. The coating material dispenser is preferably adjustable in unison with the strand guide, for example by adjusting the position or orientation of the applicator head, to facilitate application of the coating material onto the strands.

In the exemplary embodiments of FIGS. 3 and 4, spacing between the plurality of strands 20 as they are deposited onto the substrate 30 is varied by changing the orientation of the strand guide, not illustrated, and particularly the guiding surface thereof relative to a surface 32 of the substrate. The plane of the strands 20 corresponds generally to the orientation of the guiding surface of the strand guide relative to the substrate surface 32.

In the embodiment of FIG. 1, the grooved guiding surface of the strand guide 50 is parallel to the substrate surface 32, so that the plane of the strands 20 is also parallel to the substrate, as illustrated best in FIG. 3. The spacing between adjacent strands relative to the substrate surface 32 thus corresponds generally with the spacing between the grooves on the strand guide over which the strands are drawn. In FIG. 3, for example the spacing between the outermost strands is D1.

In FIG. 4, the strand guide has been pivoted to orient the grooved guiding surface thereof at an angle relative to the substrate so that the plane of the strands is at a corresponding angle relative to the substrate. The spacing between adjacent strands relative to the substrate surface 32 is thus reduced in some proportion to the angle between the substrate and the guiding surface of the strand guide over which the strands are drawn. In FIG. 4, the spacing between the outermost strands disposed over an angled strand guide is D2, which is less than the spacing D1 in FIG. 3.

FIGS. 1 and 2 illustrate the applicator head 40 pivotally mounted on a pivot or bolt shaft 70 having an axis substantially transverse to the side by side arrangement of the plurality of orifices, which permits adjustment of the orientation of the coating material dispenser and strands, as illustrated in FIGS. 3 and 4. In FIGS. 3 and 4, the pivot axis of the coating material dispenser and strand guide is aligned substantially in a direction of the moving substrate, which moves into or out of the page of the drawing.

In FIGS. 1 and 2, the pivot shaft 70 extends through a mounting block 72 supported by a support member 74, in the exemplary form of a rod. In FIG. 2, the mounting block 72 includes one or more arcuate slots 76 disposed about the pivot shaft 70. A bolt 77 extends through the corresponding slot 76 and into a threaded bore of the applicator head 40.

Engagement of the bolt 77 with opposite end portions of the slot 76 limits pivoting or rotation of the applicator head 40 about the shaft 70, and engagement of a head portion of the bolt 77 with the mounting block 72 secures the orientation of the applicator head 40 relative thereto upon tightening the bolt 77.

While the foregoing written description of the invention enables one of ordinary skill to make and use what is considered presently to be the best mode thereof, those of ordinary skill will understand and appreciate the existence of variations, combinations, and equivalents of the specific exemplary embodiments herein. The invention is therefore to be limited not by the exemplary embodiments herein.

## Claims

1. A strand coating apparatus comprising:
a support member (74);
an applicator head (40) pivotally mounted on the support member;
a coating material dispenser (10) mounted on the applicator head;
a strand guide (50) mounted on the applicator head;
**characterized by**
the strand guide and the coating material dispenser are adjustably positionable in unison by pivoting the applicator head, so that an angle between the strand guide and a substrate can be changed.

2. The apparatus of Claim 1, the coating material dispenser (10) having a plurality of orifices (13) arranged in a side by side series thereon, the strand guide (50) having a plurality of strand guiding grooves (52), each orifice (13) of the coating material dispenser is aligned with a corresponding groove (52) of the strand guide.

3. The apparatus of Claim 2, the applicator head (40) pivotally coupled to the support member (74) by a pivot member (70) having an axis aligned non-parallel to the aligment of the series of orifices (13) of the coating material dispenser (10).

4. The apparatus of Claim 1 further comprising:
the dispenser (10) having at least one orifice (13); and the strand guide comprising
a roller shaft (54) extending from a roller arm (58) adjustably coupled to the applicator head (40) by a pivot member (64, 66);
a strand guide (50) roller having a plurality of grooves (52) disposed about a rotation axis thereof,
the strand guide (50) roller rotatably coupled to the roller shaft (54).

5. The apparatus of Claim 4, a guide arm (62) adjustably coupled to the applicator head (40) by the pivot member (66), the roller arm (58) adjustably coupled to the guide arm by an additional pivot member (64).

6. The apparatus of Claim 4, the applicator head (40) adjustably coupled to the support member (74) by a pivot member (70).

7. The apparatus of Claim 4, the coating material dispenser (10) having a plurality of orifices (13) aligned in a series on a portion thereof, each of the orifices (13) of the coating material dispenser (10) aligned with a corresponding groove (52) of the strand guide roller (50).

8. The apparatus of Claim 7, the applicator head (40) pivotally mounted on a shaft (70) substantially transverse to the alignment of the plurality of orifices (13).

9. A strand coating method comprising:
drawing a plurality of strands (20) side by side, in spaced apart relation over a strand guide (50) adjacent a substrate (30);
applying a coating material from a coating material dispenser (10) onto the plurality of strands (20);
depositing the plurality of strands with the coating material applied thereto onto a substrate (30);
**characterized by**
varying the spacing of the plurality of strands (20) on the substrate by changing an orientation of the strand guide (50) relative to the substrate (30).

10. The method of Claim 9, the strand guide (50) is a roller, drawing the plurality of strands (20) over corresponding grooves (52) disposed about the roller, changing the orientation of the strand guide by tilting a rotation axis (70) thereof relative to the substrate.

11. The method of Claim 9, the coating material dispenser (10) is mounted on an applicator head (40) and the strand guide (50) is coupled thereto in fixed relation to the coating material dispenser on an upstream side thereof, changing the orientation of the strand guide (50) by pivoting the applicator head (40).

12. The method of Claim 11, the coating material dispenser (10) has a plurality of orifices (13) on a side (14) thereof aligned in a series non-parallel to a moving direction of the substrate (30), the strand guide (50) is a roller having a plurality of grooves (52) disposed thereabout in alignment with a corresponding one of the orifices (13), pivoting the applicator head (40) about a pivot member (70) having an axis aligned substantially in the moving direction of the substrate.

13. The method of Claim 12, vacillating the coating material filaments dispensed from the orifices (13) of the coating material dispenser (10) with a repeating, generally omega shaped pattern and depositing the vacillating filaments onto a corresponding adjacent strand (20).

## Patentansprüche

1. Strangbeschichtungsvorrichtung, umfassend:
ein Stützelement (74),
einen Applikatorkopf (40), der schwenkbar am Stützelement montiert ist,
einen Beschichtungsmaterialspender (10), der am Applikatorkopf montiert ist,
eine Strangführung (50), die am Applikatorkopf montiert ist,
**dadurch gekennzeichnet, dass**
die Strangführung und der Beschichtungsmaterialspender gemeinsam verstellbar positioniert werden können, indem der Applikatorkopf geschwenkt wird, so dass ein Winkel zwischen der Strangführung und einem Substrat geändert werden kann.

2. Vorrichtung nach Anspruch 1, wobei der Beschichtungsmaterialspender (10) eine Vielzahl von Öffnungen (13) hat, die in Reihen nebeneinander daran angeordnet sind, wobei die Strangführung (50) eine Vielzahl von Strangführungsnuten (52) hat, wobei jede Öffnung (13) des Beschichtungsmaterialspenders auf eine entsprechende Nut (52) der Strangführung ausgerichtet ist.

3. Vorrichtung nach Anspruch 2, wobei der Applikatorkopf (40) über ein Schwenkelement (70) mit einer nicht parallel auf die Ausrichtung der Reihen von Öffnungen (13) des Beschichtungsmaterialspenders (10) ausgerichteten Achse schwenkbar an das Stützelement (74) gekoppelt ist.

4. Vorrichtung nach Anspruch 1, ferner umfassend:
den Spender (10) mit mindestens einer Öffnung (13), wobei die Strangführung Folgendes umfast:
eine Rollenachse (54), die sich von einem Rollenarm (58) erstreckt, der über ein Schwenkelement (64, 66) verstellbar an den Applikatorkopf (40) gekoppelt ist,
eine Rolle der Strangführung (50) mit einer Vielzahl von Nuten (52), die um eine Rotationsachse davon angeordnet sind,
wobei die Rolle der Strangführung (50) drehbar an die Rollenachse (54) gekoppelt ist.

5. Vorrichtung nach Anspruch 4, wobei ein Führungsarm (62) mittels des Schwenkelements (66) verstellbar an den Applikatorkopf (40) gekoppelt ist, wobei der Rollenarm (58) mittels eines zusätzlichen Schwenkelements (64) verstellbar an den Führungsarm gekoppelt ist.

6. Vorrichtung nach Anspruch 4, wobei der Applikatorkopf (40) mittels eines Schwenkelements (70) verstellbar an das Stützelement (74) gekoppelt ist.

7. Vorrichtung nach Anspruch 4, wobei der Beschichtungsmaterialspender (10) eine Vielzahl von Öffnungen (13) hat, die an einem Abschnitt davon in einer Reihe ausgerichtet sind, wobei jede der Öffnungen (13) des Beschichtungsmaterialspenders (10) auf eine entsprechende Nut (52) der Rolle der Strangführung (50) ausgerichtet ist.

8. Vorrichtung nach Anspruch 7, wobei der Applikatorkopf (40) im Wesentlichen quer zur der Ausrichtung der Vielzahl von Öffnungen (13) schwenkbar an einem Schaft (70) montiert ist.

9. Strangbeschichtungsverfahren, umfassend:
Ziehen einer Vielzahl von Strängen (20) nebeneinander und voneinander beabstandet über eine einem Substrat (30) benachbarte Strangführung (50),
Aufbringen eines Beschichtungsmaterials aus einem Beschichtungsmaterialspender (10) auf die Vielzahl von Strängen (20),
Ablegen der Vielzahl von Strängen mit dem darauf aufgebrachten Beschichtungsmaterial auf ein Substrat (30),
**gekennzeichnet durch**
Variieren des Abstands der Vielzahl von Strängen (20) auf dem Substrat **durch** Ändern einer Ausrichtung der Strangführung (50) bezüglich des Substrats (30).

10. Verfahren nach Anspruch 9, wobei die Strangführung (50) eine Rolle ist, wobei die Vielzahl von Strängen (20) über entsprechende, um die Rolle angeordnete Nuten (52) gezogen werden und die Ausrichtung der Strangführung durch Kippen einer Rotationsachse (70) davon bezüglich des Substrats geändert wird.

11. Verfahren nach Anspruch 9, wobei der Beschichtungsmaterialspender (10) an einem Applikatorkopf (40) montiert wird und die Strangführung (50) in einer feststehenden Beziehung zum Beschichtungsmaterialspender an einer stromaufwärtigen Seite davon daran gekoppelt wird, wobei die Ausrichtung der Strangführung (50) durch Schwenken des Applikatorkopfs (40) geändert wird.

12. Verfahren nach Anspruch 11, wobei der Beschichtungsmaterialspender (10) an einer Seite (14) davon eine Vielzahl von Öffnungen (13) hat, die in einer Reihe nicht parallel zu einer Bewegungsrichtung des Substrats (30) ausgerichtet sind, wobei die Strangführung (50) eine Rolle ist, die eine Vielzahl von darum herum und auf eine entsprechende der Öffnungen (13) ausgerichtet angeordneten Nuten (52) hat, wobei der Applikatorkopf (40) um ein Schwenkelement (70) mit einer im Wesentlichen in der Bewegungsrichtung des Substrats ausgerichteten Achse geschwenkt wird.

13. Verfahren nach Anspruch 12, wobei die aus den Öffnungen (13) des Beschichtungsmaterialspenders (10) ausgegebenen Beschichtungsmaterialfilamente in einem sich wiederholenden, allgemein omegaförmigen Muster geschwungen werden und die geschwungenen Filamente auf einen entsprechenden benachbarten Strang (20) abgelegt werden.

## Revendications

1. Appareil de revêtement de fils comprenant :
un organe de support (74) ;
une tête applicatrice (40) montée à pivotement sur l'organe de support ;
un distributeur de matériau de revêtement (10) monté sur la tête applicatrice ;
un guide de fils (50) monté sur la tête applicatrice ;
**caractérisé en ce que**
le guide de fils et le distributeur de matériau de revêtement peuvent être simultanément positionnés de manière réglable en faisant pivoter la tête applicatrice, de telle sorte qu'un angle entre le guide de fils et un substrat puisse être modifié.

2. Appareil selon la revendication 1, le distributeur de matériau de revêtement (10) comportant une pluralité d'orifices (13) agencés en série côte à côte sur lui, le guide de fils (50) comportant une pluralité de rainures de guidage de fil (52), chaque orifice (13) du distributeur de matériau de revêtement est aligné sur une rainure correspondante (52) du guide de fils.

3. Appareil selon la revendication 2, la tête applicatrice (40) étant accouplée à pivotement à l'organe de support (74) par le biais d'un organe formant pivot (70) présentant un axe aligné de façon non parallèle à l'alignement de la série d'orifices (13) du distributeur de matériau de revêtement (10).

4. Appareil selon la revendication 1, comprenant en outre :
le distributeur (10) comportant au moins un orifice (13) ; et le guide de fils comprenant un arbre de rouleau (54) s'étendant à partir d'un bras de rouleau (58) accouplé de manière réglable à la tête applicatrice (40) par le biais d'un organe formant pivot (64, 66) ;
un rouleau formant guide de fils (50) comportant une pluralité de rainures (52) disposées autour d'un axe de rotation de celui-ci,
le rouleau formant guide de fils (50) étant accouplé à rotation à l'arbre de rouleau (54).

5. Appareil selon la revendication 4, un bras de guidage (62) étant accouplé de manière réglable à la tête applicatrice (40) par le biais de l'organe formant pivot (66), le bras de rouleau (58) étant accouplé de manière réglable au bras de guidage par le biais d'un organe formant pivot (64) supplémentaire.

6. Appareil selon la revendication 4, la tête applicatrice ; (40) étant accouplée de manière réglable à l'organe de support (74) par le biais d'un organe formant pivot (70).

7. Appareil selon la revendication 4, le distributeur de matériau de revêtement (10) comportant une pluralité d'orifices (13) alignés en série sur une partie de celui-ci, chacun des orifices (13) du distributeur de matériau de revêtement (10) étant aligné sur une rainure correspondante (52) du rouleau formant guide de fils (50).

8. Appareil selon la revendication 7, la tête applicatrice ; (40) étant montée à pivotement sur un arbre (70) essentiellement transversal vis-à-vis de l'alignement de la pluralité d'orifices (13).

9. Procédé de revêtement de fils comprenant les étapes suivantes :
tirer une pluralité de fils (20) côte à côte, espacés les uns des autres, sur un guide de fils (50) adjacent à un substrat (30) ;
appliquer un matériau de revêtement à partir d'un distributeur de matériau de revêtement (10) sur la pluralité de fils (20) :
déposer la pluralité de fils sur lesquels a été appliqué le matériau de revêtement sur un substrat (30) ;
**caractérisé par** l'étape suivante :
faire varier l'espacement entre la pluralité de fils (20) sur le substrat en modifiant une orientation du guide de fils (50) par rapport au substrat (30).

10. Procédé selon la revendication 9, le guide de fils (50) étant un rouleau, tirant la pluralité de fils (20) sur des rainures correspondantes (52) disposées autour du rouleau, modifiant l'orientation du guide de fils en inclinant un axe de rotation (70) de celui-ci par rapport au substrat.

11. Procédé selon la revendication 9, le distributeur de matériau de revêtement (10) étant monté sur une tête applicatrice (40) et le guide de fils (50) étant accouplé à celle-ci en position fixe vis-à-vis du distributeur de matériau de revêtement sur un côté amont de celle-ci, modifiant l'orientation du guide de fils (50) en faisant pivoter la tête applicatrice (40).

12. Procédé selon la revendication 11, le distributeur de matériau de revêtement (10) comportant une pluralité d'orifices (13) sur un côté (14) de celui-ci, alignés en série de façon non parallèle vis-à-vis d'une direction de déplacement du substrat (30), le guide de fils (50) étant un rouleau comportant une pluralité de rainures (52) disposées autour de lui en alignement avec un orifice correspondant parmi les orifices (13), faisant pivoter la tête applicatrice ; (40) autour d'un organe formant pivot (70) présentant un axe aligné essentiellement dans la direction de déplacement du substrat.

13. Procédé selon la revendication 12, faisant vaciller les filaments de matériau de revêtement distribués par les orifices (13) du distributeur de matériau de revêtement (10) suivant un motif répété, globalement en forme d'oméga et déposant les filaments oscillants sur un fil adjacent correspondant (20).
